# EUROPEAN PATENT SPECIFICATION

(11) **EP 4 067 966 B1**
(45) Date of publication and mention of the grant of the patent: **25.12.2024**
(21) Application number: 21202324.6
(22) Date of filing: 13.10.2021
(51) Int. Cl.: G02B 23/16, F16H 55/14, F16H 55/24

(54) **MOUNT COMPRISING AN ELASTIC WORM GEAR ASSEMBLY**
HALTERUNG AUFWEISEND EINE ELASTISCHE SCHNECKENGETRIEBEANORDNUNG
SUPPORT COMPRENANT UN ENSEMBLE VIS SANS FIN ÉLASTIQUE

(30) Priority: 02.04.2021 CN 202110361262; 21.06.2021 US 202117352801
(43) Date of publication of application: 05.10.2022
(73) Proprietor: Nantong Schmidt Opto-Electrical Technology Co., Ltd., Jiangsu 226500 (CN)
(72) Inventor: SUN, Yu Feng, Suzhou City, 226500 (CN); ZHU, Xue Feng, Rudong County, 226500 (CN)
(74) Representative: Eisenführ Speiser

(56) References cited:
- DE-B- 1 186 296
- US-A1- 2019 106 146
- US-A1- 2020 218 056

## Description

### Technical Field

The present invention relates to a mount for a telescope or other optical instrument which incorporates an elastic worm gear assembly.

### Background

Several moveable mounts exist for telescopes or other optical instruments. Two main types of telescope mounts are equatorial mounts and altitude-azimuthal mounts. Each of these mounts is configured so that a telescope (supported by the mount) can be moved on two orthogonal axes.

US 2020/218056 A1 discloses an equatorial mount for an optical instrument. DE 11 86 296 B discloses a worm gear. US 2019/106146 A1 discloses a worm wheel of an electric power steering apparatus.

Equatorial mounts compensate for Earth's rotation and provide single-axis tracking of celestial objects. For example, the German equatorial mount typically has a right ascension shaft, a declination shaft, and a counterweight shaft. The right ascension shaft is rotatable relative to the base about a right ascension axis. The declination shaft is rotatable relative to the right ascension shaft about a declination axis. The declination axis is orthogonal to the right ascension axis. The counterweight shaft is mounted to one end of the right ascension shaft and extends from the right ascension shaft along a counterweight axis that is co-linear with the declination axis.

Altitude-azimuthal mounts, also referred to as altazimuth mounts or alt-az mounts, rotate an optical instrument about two perpendicular axes: an azimuthal axis and an altitude axis. The orientation of an optical instrument mounted on an alt-az mount corresponds to a set of coordinates referred to as the alt-az coordinates. The alt-az coordinates are typically expressed in degrees of altitude and azimuth. Altitude represents the angular orientation of an optical instrument about the altitude axis relative to the horizon. Altitude is typically expressed in a range of -90° to 90°, with 0° representing the horizon. The point at 90° is a point that is directly overhead for an observer. The point directly overhead is called the zenith. Azimuth represents the angular orientation of an optical instrument about the azimuthal axis and is expressed in a range of 0° to 360°. Typically, azimuth is selected to represent the true compass (as opposed to magnetic) heading towards a point on the horizon and is measured eastwardly from the North celestial pole.

Worm gear assemblies are often used in both equatorial mounts and altitude-azimuthal mounts to enable rotation of a mounted telescope. A worm gear assembly includes a worm shaft (also referred to as a worm and a worm screw) and a worm wheel (also referred to as a worm gear). The worm shaft and the worm wheel cooperate with one another, so that rotation of the worm shaft about a worm axis causes corresponding rotation of the worm wheel about a wheel axis that is generally orthogonal to the worm axis. In a motorized mount, a motor typically acts on a worm shaft, which in turn cooperates with a worm wheel. In practice, the mechanical engagement between the worm wheel and the worm shaft is often too loose or too tight. When the engagement is too loose, the orientation of a mounted optical instrument may not be adjusted with a high precision. When the engagement is too tight, it may be difficult to turn the worm shaft and this may result in increased friction and associated wear and tear of the worm gear assembly.

There is a general desire for a worm gear assembly for a mount for a telescope or other optical instrument that allows ease of operation, prevents pre-mature wear and tear, and/or enables precise adjustment of a mounted optical instrument.

The foregoing examples of the related art and limitations related thereto are intended to be illustrative and not exclusive. Other limitations of the related art will become apparent to those of skill in the art upon a reading of the specification and a study of the drawings.

### Summary

The following embodiments and aspects thereof are described and illustrated in conjunction with systems, tools and methods which are meant to be exemplary and illustrative. In various embodiments, one or more of the above-described problems have been reduced or eliminated, while other embodiments are directed to other improvements.

One aspect of the invention provides a mount for a telescope or other optical instrument according to claim 1.

In an example useful for understanding the invention, but not covered by the subject-matter of the claims, a worm gear assembly for use with a mount for a telescope or other optical instrument is provided comprising a holder for supporting an optical instrument mounted thereto, where operation of the worm gear assembly enables the holder to move relative to a base about a wheel axis. The worm gear assembly comprises: a worm wheel rigidly connected to the holder, such that movement of the worm wheel about the wheel axis causes corresponding movement of the holder about the wheel axis; and a worm shaft comprising a worm body extending in a longitudinal direction and a thread extending in a spiral on the worm body around a longitudinally oriented worm axis that is orthogonal to the wheel axis, the worm shaft supported by the base for rotational movement about the worm axis. The worm wheel comprises a generally disc-shaped wheel body comprising a plurality of radially extending and circumferentially spaced apart teeth at a radially outermost peripheral surface for engaging the thread of the worm shaft, so that rotation of the worm shaft about the worm axis causes, by engagement of the teeth with the thread, corresponding rotation of the worm wheel about the wheel axis and corresponding relative rotation of the holder and the base about the wheel axis. The wheel body is shaped to define a plurality of elasticity-enhancing cutouts spaced apart from the wheel axis and extending through the wheel body in a directions parallel to the wheel axis.

Each one of the elasticity-enhancing cutouts may be defined, at least in part, by a pair of continuous cut-out defining surfaces. The continuous cut-out defining surfaces may meet at a first discontinuous corner. The continuous cut-out defining surfaces may meet at the first discontinuous corner and at a second discontinuous corner. The first and second corners may be spaced apart from one another (e.g. in an angular direction around the wheel axis).

The continuous cut-out defining surfaces may be continuously curved. The continuous cut-out defining surfaces may be arcuate. The continuous cut-out defining surfaces may comprise different radii of curvature. The continuous cut-out defining surfaces may comprise different centers of curvature.

The elasticity-enhancing cutouts may each comprise a generally crescent-shaped cross section in a cross-sectional direction orthogonal to the wheel axis.

Each one of the elasticity-enhancing cutouts may be defined by a cut-out defining surface. The cut-out defining surface may comprise a first arcuate portion and a second arcuate portion connected to the first arcuate portion by a pair of spaced apart discontinuities . The first arcuate portion and the second arcuate portion may comprise different centers of curvature. The first arcuate portion and the second arcuate portion may comprise different radii of curvature.

Each one of the elasticity-enhancing cutouts may be defined, at least in part, by a plurality of continuous cut-out defining surfaces. At least one pair of the plurality of continuous cut-out defining surfaces may meet at a discontinuous corner. The continuous cut-out defining surfaces may be arcuate.

The elasticity-enhancing cutouts may each comprise a generally triangular cross section in a cross-sectional direction orthogonal to the wheel axis.

Each one of the elasticity-enhancing cutouts may be defined, at least in part, by four continuous cut-out defining surfaces. Two of the four continuous cut-out defining surfaces may extend radially from the wheel axis and the other two of the four continuous cut-out defining surfaces may extend circumferentially about the wheel axis.

The continuous cut-out defining surfaces may each extend in a direction that is parallel to the wheel axis.

The elasticity-enhancing cutouts may be shaped or located such that any notional radial line between the wheel axis and the teeth intersects at least one pair of continuous cut-out defining surfaces has one or more discontinuities therebetween. At least one notional radial line may intersect a second pair of continuous cut-out defining surfaces having one or more discontinuities therebetween.

The elasticity-enhancing cutouts may be positioned at uniform angular intervals about the wheel axis.

A ratio of the volume of the elasticity-enhancing cutouts to the volume of the worm wheel may be between about 15% and about 45%, thereby providing a wheel body having a mass that is about 15% to about 45% lower than a mass that the wheel body would have if made from solid material.

The base may be moveable relative to a base support component and the worm shaft may be supported by the base such that movement of the base relative to the base support component causes corresponding movement of the worm axis and the wheel axis, while maintaining the orthogonality therebetween.

In addition to the exemplary aspects and embodiments described above, further aspects and embodiments will become apparent by reference to the drawings and by study of the following detailed descriptions.

### Brief Description of the Drawings

Exemplary embodiments are illustrated in referenced figures of the drawings. It is intended that the embodiments and figures disclosed herein are to be considered illustrative rather than restrictive.
Figure 1 is a perspective view of an example embodiment of a worm gear assembly of a mount according to the present invention.
Figures 2A-C each show a top view of an example embodiment of an elastic worm wheel of a mount according to the invention.
Figure 3 is a perspective view of an alt-azimuth mount comprising the elastic worm gear assembly of Figure 1.
Figure 4 is a perspective, partial view of the alt-az mount of Figure 3.
Figure 5 is a perspective view of the alt-az mount of Figure 3 with an exposed handle to show the elements housed therein.
Figure 6 is a cross-sectional view of the alt-az mount of Figure 3 taken along the line A-A.

### Description

In an example useful for understanding the invention, but not covered by the subject-matter of the claims, an elastic worm gear assembly is described herein. The elastic worm gear assembly may be used in a moveable mount for a telescope or other optical instrument. The elastic worm gear assembly comprises a worm shaft and a worm wheel that is mounted for operational engagement with the worm shaft such that rotation of the worm shaft about a worm axis causes corresponding rotation of the worm wheel about a wheel axis that is orthogonal to the worm axis. The worm shaft comprises a worm body extending in a longitudinal direction (generally parallel to the worm axis) and a thread extending in a spiral on an external surface of the worm body around the worm axis. The worm wheel comprises a generally disc-shaped wheel body comprising a plurality of radially extending and circumferentially spaced apart teeth at a radially outermost peripheral surface for engaging the thread of the worm shaft. The wheel body is shaped to define a plurality of elasticity-enhancing cutouts spaced apart from the wheel axis and extending through the wheel body in a direction parallel to the wheel axis. The elasticity-enhancing cutouts confer enhanced elasticity to the wheel body (relative to a solid wheel body), so that the worm wheel is more resiliently (elastically) deformable (relative to a solid wheel body) in a radial direction toward the wheel axis. In some embodiments, the elasticity-enhancing cutouts confer enhanced elasticity to the wheel body so that the worm wheel is more resiliently (elastically) deformable (relative to a solid wheel body) in other direction(s), such as in a direction parallel to the wheel axis and/or a circumferential direction. In some embodiments, a ratio of the volume of the elasticity-enhancing cutouts to the volume of the worm wheel is between about 25% and about 45%, thereby providing a wheel body having a mass that is about 25% to about 45% lower than a mass that the wheel body would have if made from solid material. When the elastic worm gear assembly is incorporated in a telescope mount, the elasticity-enhancing cutouts help to achieve an engagement between the elastic worm wheel and the worm shaft that is relatively close to an ideal engagement (e.g. neither too tight nor too loose) when compared to a conventional worm gear assembly, to thereby enable precise adjustment of a telescope mounted on the telescope mount.

As used herein, unless the context dictates otherwise, the terms "elastic" and "resiliently deformable" mean that a worm wheel is able to return to its original shape after the worm wheel is deformed by an applied force and the applied force is subsequently removed.

As used herein, unless the context dictates otherwise, the terms "about" and "approximately" mean plus and minus 5%.

As used herein, unless the context dictates otherwise, the term "generally" means in general terms. For example, a "generally disc-shaped wheel body" means that the wheel body has an overall shape of a disc, but it does not need to be a perfectly circular in cross-sectional shape.

As used herein, unless the context dictates otherwise, the term "continuity" or "continuous" or "continuously" means a smooth transition. In contrast, the term "discontinuity" or "discontinuous" or "discontinuously" means a non-smooth transition. For example, an elasticity-enhancing cutout may be defined by a pair of continuous cutout defining surfaces wherein the continuous cutout defining surfaces are connected (or meet) at discontinuous (i.e. non-smooth, characterized by a sharp angle) corners, where the radii of curvature of such discontinuous corners is less than 2cm or, in some embodiments, less than 1cm or, in some embodiments, less than 5mm or, in some embodiments, less than 2.5mm.

The following description sets forth specific details in order to provide a more thorough understanding to persons skilled in the art. It describes:
- a worm gear assembly comprising an elastic worm wheel; and
- a handheld alt-azimuth mount comprising the worm gear assembly.

However, well known elements may not have been shown or described in detail to avoid unnecessarily obscuring the disclosure. Accordingly, the description and drawings are to be regarded in an illustrative, rather than a restrictive, sense.

### Worm Gear Assembly

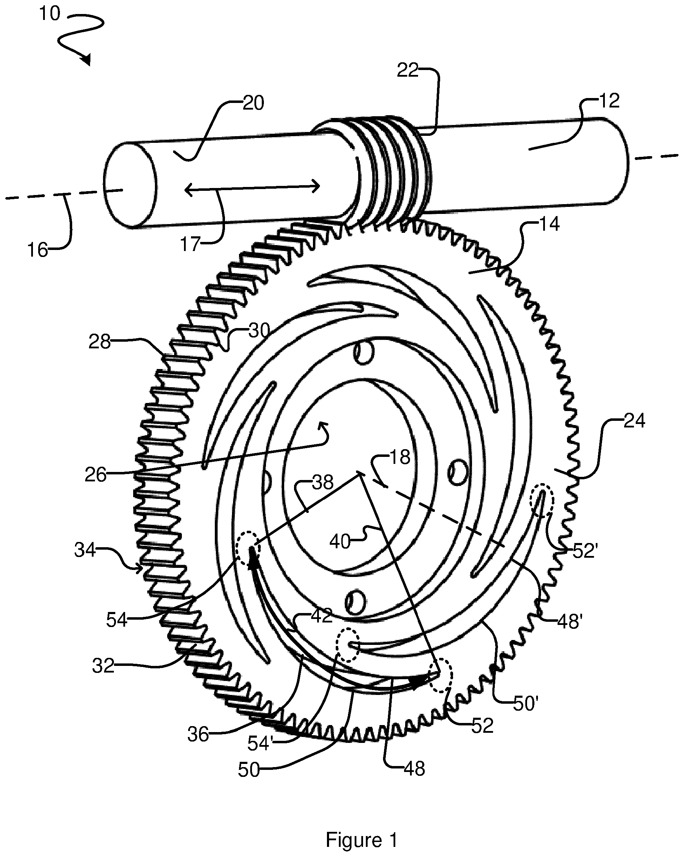

Figure 1 shows a perspective view of a worm gear assembly 10 comprising a worm shaft 12 and an elastic worm wheel 14. Worm shaft 12 and elastic worm wheel 14 are operably engaged.

Focusing on the structural features of worm shaft 12, worm shaft 12 comprises a worm body 20 extending in a longitudinal direction 17. At least a portion of worm body 20 is circumscribed by a single thread 22. Single thread 22 extends in a spiral about a longitudinally-oriented worm axis 16 on an outer surface of worm shaft 12. Worm axis 16 extends in longitudinal direction 17 and is aligned with a central axis of worm body 20. In the illustrated embodiment, single thread 22 is a V-type thread with a V-shaped cross section. In other embodiments, worm body 20 may be wrapped by multiple threads. Worm body 20 may be wrapped by a non-V-type thread. The entire worm body 20 may be wrapped by a thread. Worm shaft 12 may be a single enveloped worm or a double enveloped worm. Worm shaft 12 may have threads that form a single start or multiple starts. Worm shaft 12 may be integrally formed and can be made of any suitable materials. For example, worm shaft 12 may be entirely made of metal or plastic. Worm body 20 and thread 22 may be made of different materials, for example with worm body 20 made of metal and thread 22 made of plastic. Overall, worm shaft 12 can be any threaded worm known in the art as long as worm shaft 12 can operably engage worm wheel 14, so that torque can be transmitted from worm shaft 12 to worm wheel 14.

With respect to worm wheel 14, worm wheel 14 comprises a generally disc-shaped wheel body 24. Disc-shaped wheel body 24 of the illustrated embodiment has a central fitting hole portion 26 although in other embodiments, central fitting hole portion 26 may be omitted. Disc-shaped wheel body 24 comprises a plurality of radially extending and circumferentially spaced-apart teeth 28 at a radially outermost peripheral surface 32. Space 34 between adjacent teeth 28 is shaped for engaging thread 22 of worm shaft 12, so that rotation of worm shaft 12 about worm axis 16 causes corresponding rotation of worm wheel 14 about a wheel axis 18. Wheel axis 18 is orthogonal to worm axis 16.

Wheel body 24 is shaped to define a plurality of elasticity-enhancing cutouts 36 which confer a degree of elasticity to wheel body 24, so that worm wheel 14 is more resiliently (elastically) deformable (relative to a solid wheel body) in a radial direction towards wheel axis 18. In some embodiments, the elasticity-enhancing cutouts confer enhanced elasticity to wheel body 24 so that worm wheel 14 is more resiliently (elastically) deformable (relative to a solid wheel body) in other direction(s), such as in directions parallel to the wheel axis and/or circumferential directions. Elasticity-enhancing cutouts 36 are spaced apart from wheel axis 18. Elasticity-enhancing cutouts 36 extend through wheel body 24 in a direction parallel to wheel axis 18.

To provide a desired level of elasticity while maintaining a desired level of physical rigidity, in some embodiments, the ratio of the volume of elasticity-enhancing cutouts 36 to the volume of worm wheel 14 is between about 15% and about 45%, thereby providing a wheel body having a mass that is about 15% to about 45% lower than a mass that the wheel body would have if made from solid material. The ratio may be any value between about 15% and about 45%, e.g. 17%, 20%, 25%, 28%, 31%, 33%, 35%, 37%, 39%, 41%, and 43%. The ratio of the volume of elasticity-enhancing cutouts 36 to the volume of worm wheel 14 may change depending on the shape and placement of elasticity-enhancing cutouts 36.

Elasticity-enhancing cutouts 36 can have any suitable shapes and dimensions. Also, elasticity-enhancing cutouts 36 can be arranged in any suitable placement. The shapes, dimensions, and/or placement of elasticity-enhancing cutouts 36 confer a level of elasticity to wheel body 24, so that worm wheel 14 is resiliently deformable in a radial direction towards wheel axis 18.

Focusing on the currently desired shapes of elasticity-enhancing cutouts 36, elasticity-enhancing cutouts 36 may be an oblong shape, a boomerang shape, a rectangular shape, or a triangular shape. Elasticity-enhancing cutouts 36 may be identical to or different from each other.

In the illustrated embodiment, elasticity-enhancing cutouts 36 have the same shape and dimensions. For brevity, only one elasticity-enhancing cutout 36 is described in detail below. Elastic-enhancing cutout 36 is curved and forms a generally crescent shape in a cross-sectional direction orthogonal to wheel axis 18. Elasticity-enhancing cutout 36 extends from an inner radius 38 to an outer radius 40 in an arcuate direction 42. Elasticity-enhancing cutout 36 is defined by a pair of continuous cut-out defining surfaces 48, 50. Continuous cut-out defining surfaces 48, 50 each extend through wheel body 20 in a direction parallel to wheel axis 18, although in some other embodiments, not covered by the subject-matter of the claims, continuous cut-out defining surfaces 48, 50 may extend through wheel body 20 in a direction that intersects wheel axis 18. Continuous cut-out defining surfaces 48, 50 are each arcuate, smooth and free from sharp edges. Continuous cut-out defining surfaces 48, 50 of the illustrated embodiment have different centers of curvature and different radii of curvature, although this is not necessary. Continuous cut-out defining surfaces 48, 50 are connected and meet at discontinuous corners 52, 54. The radii of curvature at discontinuous corners 52, 54 may be less than 2cm or, in some embodiments, less than 1cm or, in some embodiments, less than 5mm or, in some embodiments, less than 2.5mm.

In terms of the placement of elasticity-enhancing cutouts 36, the placement may be impacted by the shapes and dimensions of elasticity-enhancing cutouts 36. This is because the shapes, dimensions, and placement of elasticity-enhancing cutouts 36 function together to confer a desired level of elasticity to wheel body 24 and worm wheel 14.

In the illustrated embodiment, elasticity-enhancing cutouts 36 are located (and shaped) such that any notional radial line between wheel axis 18 and teeth 28 intersect at least one pair of continuous cut-out defining surfaces 48, 50 having one or more discontinuities 52, 54 therebetween. Further, elasticity-enhancing cutouts 36 are located (and shaped) such that at least one notional radial line intersects a second pair of continuous cut-out defining surfaces 48', 50' having one or more discontinuities therebetween 52', 54'. In other words, elasticity-enhancing cutouts 36 are positioned in a staggered manner, so that one or more pairs of adjacent elasticity-enhancing cutouts 36 overlap in some degree in a circumferential direction and are separated in a radial direction.

In the illustrated embodiment, elasticity-enhancing cutouts 36 are spaced apart at a uniform angular interval about wheel axis 18.

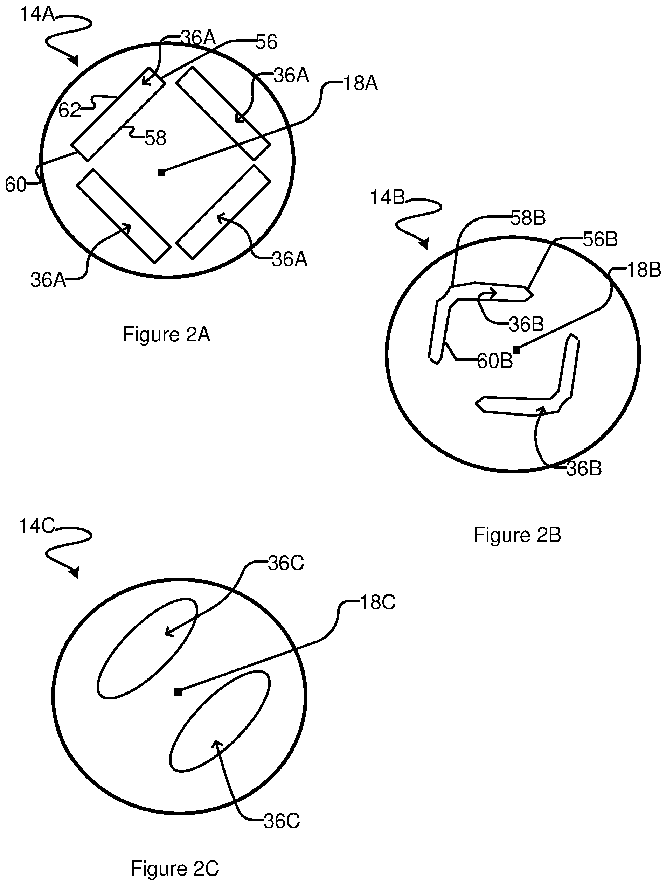

Some other embodiments of elasticity-enhancing cutouts 36 are schematically shown in Figure 2A-C. Figure 2A shows a worm wheel 14A having a plurality of elasticity-enhancing cutouts 36A. Each one of elasticity-enhancing cutouts 36A is defined by four continuous cut-out defining surfaces 56, 58, 60, 62. Elasticity-enhancing cutouts 36A comprises a rectangular cross section taken in a cross-sectional direction orthogonal to wheel axis 18A. In other words, each one of elasticity-enhancing cutouts 36A is defined by four continuous surfaces 56, 58, 60, 62.. Figure 2B shows a worm wheel 14B having a plurality of elasticity-enhancing cutouts 36B. Each one of elasticity-enhancing cutouts 36B is defined by a continuous cut-out defining surface 56B. Continuous cut-out defining surface 56B comprises a first curved portion 58B and a second curved portion 60B connected to first curved portion 58B. First curved portion 58B and second curved portion 60B have the same center of curvature although they have different radii of curvature. Elasticity-enhancing cutouts 36B each comprise a generally boomerang-shaped cross section in a cross-sectional direction orthogonal to the wheel axis 18B. Figure 2C shows a worm wheel 14C having a plurality of elasticity-enhancing cutouts 36C. Each one of elasticity-enhancing cutouts 36C comprises an oblong section taken in a cross-sectional direction orthogonal to wheel axis 18C. In other words, elasticity-enhancing cutouts 36C each is defined by a continuous cut-out defining surface. A person skilled in the art would appreciate that elasticity-enhancing cutouts may have any suitable shapes and dimensions that provide worm wheel 14 with the desired elasticity properties. Other possible embodiments include elasticity-enhancing cutouts defined by three continuous cut-out defining surfaces. The three continuous cut-out defining surfaces may be curved and may meet at three discontinuous corners. The elasticity-enhancing cutouts each may comprise a generally triangular cross section in a cross-sectional direction orthogonal to the wheel axis.

Worm wheel 14 may be integrally formed and can be made of any suitable materials. In some embodiments, worm wheel 14 is entirely made of metal or plastic. In some other embodiments, worm wheel body 24 and teeth 28 are made of different materials. For example, worm wheel body 24 may be made of metal and teeth 28 may be made of plastic.

In operation, worm shaft 12 and elastic worm wheel 14 are mounted in operational engagement with one another, so that when worm shaft 12 rotates about worm axis 16, worm shaft 12 acts on and rotates worm wheel 14 about wheel axis 18. Worm rotation axis 16 and wheel rotation axis 18 are oriented perpendicular to each other and do not intersect. Thread 22 engages with teeth 28, so that the turning actions of worm shaft 12 act on and drive worm wheel 14. Worm wheel 14 is resiliently (elastically) deformable in a radial direction towards wheel axis 18 (e.g. more elastically deformable than a solid worm wheel). In some embodiments, the elasticity-enhancing cutouts 36 confer enhanced elasticity to wheel body 24, so that worm wheel 14 is more resiliently (elastically) deformable (relative to a solid wheel body) in other direction(s) such as in directions parallel to the wheel axis and/or circumferential directions. When thread 22 is received space 34 between adjacent teeth 28, worm shaft 12 may press on worm wheel 14, so that worm wheel 14 is elastically compressed inwardly towards wheel axis 18. The compression force acts on outer peripheral surface 30, thereby causing worm wheel 14 to deform radially and inwardly. The resilient deformation of worm wheel 14 promotes engagement and minimizes backlash between worm 12 and worm wheel 14 with worm 14 rotating about worm rotation axis 16.

### Handheld Alt-Az Mount Comprising Elastic Worm Gear Assembly

As an example useful for understanding the mount according to the invention, but not covered by the subject-matter of the claims, worm gear assembly 10 can be incorporated in mount for a telescope or other optical instrument. When incorporated in a mount, worm gear assembly 10 enables precise adjustment of a telescope mounted on the mount. This is because elasticity-enhancing cutouts 36 and the corresponding resilient deformation of worm wheel 14 encourage an ideal engagement between elastic worm wheel 14 and worm shaft 12 that is neither too tight nor too loose (e.g. mitigating backlash).

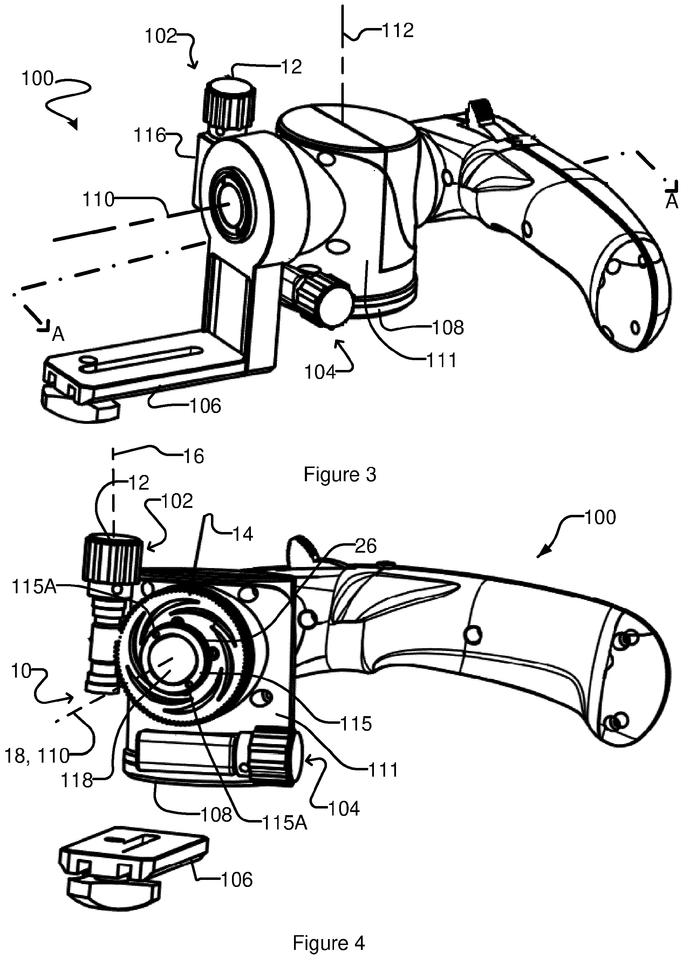

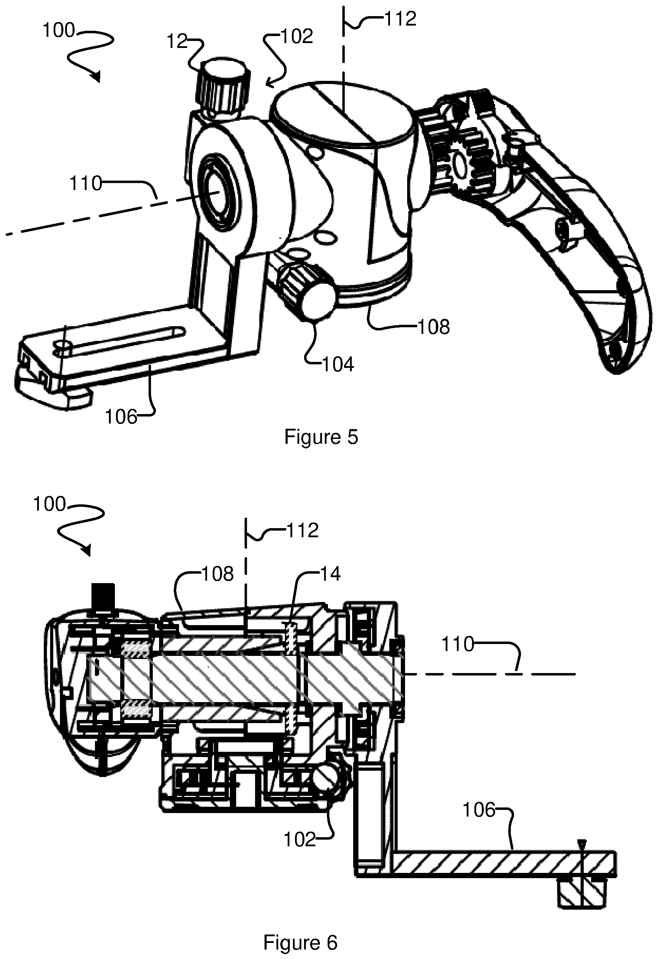

An example embodiment of a mount 100 that incorporates worm gear assembly 10 is shown in Figures 3-6. Mount 100 is a handheld alt-az mount, where precise adjustment of the altitude-azimuthal coordinates can be a challenge. The deployment of worm gear assembly 10 in handheld alt-az mount 100 facilitates relatively accurate altitude and/or azimuth adjustment (relative to a mount incorporating a solid worm gear assembly), because of the resilient deformability of worm wheel 14.

Handheld alt-az mount 100 comprises a holder 106 for supporting an optical instrument (not shown) mounted thereto. Holder 106 is rotationally moveable relative to a base 108 about an altitude axis 110 and an azimuth axis 112 by operation of an altitude-rotation mechanism 102 and an azimuth-rotation mechanism 104, respectively. The structural features of altitude-rotation mechanism 102 and azimuth- rotation mechanism 104 may be substantially the same in terms of their worm gear assemblies 10. For brevity, only altitude-rotation mechanism 102 is described in detail below.

As shown in Figures 3-6, altitude-rotation mechanism 102 comprises worm gear assembly 10 that includes worm shaft 12 rotatable about worm axis 16 and worm wheel 14 rotatable about wheel axis 18. Worm shaft 12 is supported for rotatable motion about worm axis 16 (Figure 4) in a sleeve 116 (Figure 3). Sleeve 116 may form part of holder support component 111 or may be rigidly mounted to holder support component 111. Holder support component 111 supports holder 106 and rotates with holder 106 about azimuth axis 112 by the action of azimuth-rotation mechanism 104. However, holder 106 rotates relative to holder support component 111 about altitude axis 110 by the action of altitude-rotation mechanism 102, as explained in more detail below.

As shown best in Figure 4, worm shaft 12 of altitude-rotation mechanism 102 is rotatable about its worm axis 16 within sleeve 116. Sleeve 116 is located such that rotation of worm shaft 12 causes corresponding rotation of worm wheel 14 about wheel axis 18 which may be collinear with altitude axis 110. Worm wheel 114 is rotatably supported on rod bearing 118 of holder support component 111, such that worm wheel 114 is rotatable about altitude axis 110 (wheel axis 18) by bearing on the surface of rod bearing 118. In the illustrated embodiment, worm wheel 114 comprises a keyed collar 115 having a pair of key slots 115A. Holder 106 fits over keyed collar 115, so that corresponding key protrusions (not shown) of holder 106 fit into key slots 115A. In this manner, rotation of worm shaft 12 about worm axis 16 (e.g. by a user in some embodiments or by a suitably configured motor in some embodiments) causes corresponding rotation of worm wheel 14 about altitude axis 110 (wheel axis 18) and when worm wheel 14 rotates, keyed collar 115 rotates which in turn causes holder 106 to rotate about altitude axis 110 by the engagement of the key protrusions of holder 106 into key slots 115A. As discussed above, worm wheel 14 comprises cutouts 36 (not specifically enumerated in Figures 4-6) which provide a relatively high degree of elastic deformability to worm wheel 14 (relative to a solid worm wheel) and the corresponding benefits to altitude-rotation mechanism 102 (as discussed elsewhere herein)

Persons skilled in the art will appreciate that in examples not covered by the subject-matter of the claims altitude-rotation mechanism 102 may be constructed with other specific configurations which use worm wheel assembly 10 to facilitate rotational movement of one component (e.g. holder 106) relative to another component (e.g. holder support component 111) about an altitude axis 110 and which take advantage of worm wheel assembly 10 and deformable worm wheel 14. Persons skilled in the art will appreciate that in examples not covered by the subject-matter of the claims an azimuth-rotation mechanism 104 may be similarly constructed with similar configurations which use worm wheel assembly 10 to facilitate rotational movement of one component (e.g. holder support component 111) relative to another component (e.g. base 108) about an azimuth axis 112 and which take advantage of worm wheel assembly 10 and deformable worm wheel 14.

In some embodiments, mount 100 may be an equatorial mount comprising a holder for supporting an optical instrument mounted thereto, the holder rotationally movable relative to a base about right ascension and declination axes, by corresponding right ascension and declination rotation mechanisms where one or both of the right ascension and declination rotation mechanisms comprises a worm gear assembly 10 having a deformable worm wheel 14.

In some embodiments, worm gear assembly 10 may be operated by a motor. For example, the rotation of worm shaft 12 may be driven by a motor.

## Claims

1. A mount for a telescope or other optical instrument comprising:
a base (108);
a holder (106) for supporting an optical instrument mounted thereto;
a worm gear assembly (10);
the holder (106) movable relative to the base (108) about a wheel axis (18, 112) by operation of the worm gear assembly (10);
the worm gear assembly (10) comprising:
a worm wheel (14) rigidly connected to the holder (106), such that movement of the worm wheel (14) about the wheel axis (18) causes corresponding movement of the holder (106) about the wheel axis (18);
a worm shaft (12) comprising a worm body (20) extending in a longitudinal direction (17) and a thread (22) extending in a spiral on the worm body (20) around a worm axis (16) that extends in the longitudinal direction (17) and is orthogonal to the wheel axis (18), the worm shaft (12) supported by the base (108) for rotational movement about the worm axis (16) ;
the worm wheel (14) comprising a generally disc-shaped wheel body (24) comprising a plurality of radially extending and circumferentially spaced apart teeth (28) at a radially outermost peripheral surface for engaging the thread (22) of the worm shaft (12), so that rotation of the worm shaft (12) about the worm axis (16) causes, by engagement of the teeth (28) and the thread (22), corresponding rotation of the worm wheel (14) about the wheel axis (18) and corresponding relative rotation of the holder (106) and the base (108) about the wheel axis (18); **characterized in that**
the wheel body (24) is shaped to define a plurality of elasticity-enhancing cutouts (36) spaced apart from the wheel axis (18) and extending through the wheel body (24) in directions parallel to the wheel axis (18), the elasticity-enhancing cutouts (36) enhancing elasticity of the worm wheel (14) in a radial direction relative to a solid wheel body such that the worm wheel (14) can deform radially and inwardly.

2. A mount as defined in claim 1, wherein each one of the elasticity-enhancing cutouts (36) is defined, at least in part, by a pair of smooth cut-out defining surfaces (48, 50) that meet at first and second non-smooth corners (52, 54), the first and second non-smooth corners (52, 54) spaced apart from one another.

3. A mount as defined in claim 2, wherein the smooth cut-out defining surfaces (48, 50) are arcuate.

4. A mount as defined in claim 3, wherein each of the pair of smooth cut-out defining surfaces (48, 50) are arcuate and comprise different radii of curvature.

5. A mount as defined in any one of claims 3 to 4, wherein each of the pair of smooth cut-out defining surfaces (48, 50) are arcuate and comprise different centers of curvature.

6. A mount as defined in any one of claims 1 to 5, wherein the elasticity-enhancing cutouts (36) each comprise a generally crescent-shaped cross section in a cross-sectional plane orthogonal to the wheel axis (18).

7. A mount as defined in claim 1, wherein:
each one of the elasticity-enhancing cutouts (36) is defined by a cut-out defining surface (48, 50);
the cut-out defining surface (48, 50) comprises a first arcuate portion (48) and a second arcuate portion (50) connected to the first arcuate portion (48) by a pair of spaced apart discontinuities (52, 54); and
the first arcuate portion (48) and the second arcuate portion (50) comprise different centers of curvature and/or different radii of curvature.

8. A mount as defined in claim 1, wherein each one of the elasticity-enhancing cutouts is defined, at least in part, by a plurality of smooth cut-out defining surfaces (56, 58, 60, 62).

9. A mount as defined in claim 8, wherein at least one pair of the plurality of smooth cut-out defining surfaces (56, 58, 60, 62) meet at a non-smooth corner.

10. A mount as defined in any one of claims 8 and 9 wherein the smooth cut-out defining surfaces (58B, 60B) are arcuate.

11. A mount as defined in any one of claims 2 to 5 and 7 to 10, wherein the smooth cut-out defining surfaces (48, 50) each extend in a direction that is parallel to the wheel axis (18).

12. A mount as defined in any one of claims 2 to 11, wherein the elasticity-enhancing cutouts (36) are shaped or located such that any notional radial line between the wheel axis (18) and the teeth (28) intersects at least one pair of smooth cut-out defining surfaces (48, 50) having one or more non-smooth transitions therebetween.

13. A mount as defined in claim 12, wherein at least one notional radial line intersects a second pair of smooth cut-out defining surfaces (48', 50') having one or more non-smooth transitions therebetween.

14. A mount as defined in any one of claims 1 to 13, wherein a ratio of the volume of the elasticity-enhancing cutouts to the volume of the worm wheel is between 15% and 45%, thereby providing a wheel body having a mass that is 15% to 45% lower than a mass that the wheel body would have if made from solid material.

15. A mount as defined in any one of claims 1 to 14 comprising a base support component and wherein the base (108) is moveable relative to the base support component and the worm shaft (104) is supported by the base (108) such that movement of the base (108) relative to the base support component causes corresponding movement of the worm axis and the wheel axis, while maintaining the orthogonality therebetween.

## Patentansprüche

1. Eine Halterung für ein Teleskop oder ein anderes optisches Instrument, umfassend:
eine Basis (108);
einen Halter (106) zum Tragen eines daran befestigten optischen Instruments;
eine Schneckengetriebeanordnung (10);
der Halter (106) ist relativ zur Basis (108) um eine Radachse (18, 112) durch Betätigung der Schneckengetriebeanordnung (10) beweglich;
die Schneckengetriebeanordnung (10) umfasst:
ein Schneckenrad (14), das starr mit dem Halter (106) verbunden ist, so dass eine Bewegung des Schneckenrades (14) um die Radachse (18) eine entsprechende Bewegung des Halters (106) um die Radachse (18) bewirkt;
eine Schneckenwelle (12), umfassend einen Schneckenkörper (20), der sich in einer Längsrichtung (17) erstreckt, und ein Gewinde (22), das sich auf dem
Schneckenkörper (20) spiralförmig um eine Schneckenachse (16) erstreckt, die sich in der Längsrichtung (17) erstreckt und orthogonal zur Radachse (18) ist, wobei die Schneckenwelle (12) von der Basis (108) für eine Drehbewegung um die
Schneckenachse (16) getragen wird;
das Schneckenrad (14) umfasst einen im Allgemeinen scheibenförmigen Radkörper (24), der eine Vielzahl von sich radial erstreckenden und in Umfangsrichtung voneinander beabstandeten Zähnen (28) an einer radial äußersten Umfangsfläche zum Eingriff in das Gewinde (22) der Schneckenwelle (12) aufweist, so dass eine Drehung der Schneckenwelle (12) um die Schneckenachse (16) durch den Eingriff der Zähne (28) und des Gewindes (22) eine entsprechende Drehung des Schneckenrades (14) um die Radachse (18) und eine entsprechende relative Drehung des Halters (106) und der Basis (108) um die Radachse (18) bewirkt; **dadurch gekennzeichnet, dass** der Radkörper (24) so geformt ist, dass er eine Vielzahl von elastizitätserhöhenden Ausschnitten (36) definiert, die von der Radachse (18) beabstandet sind und sich durch den Radkörper (24) in Richtungen parallel zur Radachse (18) erstrecken, wobei die elastizitätserhöhenden Ausschnitte (36) die Elastizität des Schneckenrads (14) in einer radialen Richtung relativ zu einem massiven Radkörper erhöhen, so dass sich das Schneckenrad (14) radial und nach innen verformen kann.

2. Halterung nach Anspruch 1, wobei jeder der elastizitätserhöhenden Ausschnitte (36) zumindest teilweise durch ein Paar glatter, ausschnittsdefinierender Oberflächen (48, 50) definiert ist, die sich an ersten und zweiten nicht-glatten Ecken (52, 54) treffen, wobei die ersten und zweiten nicht-glatten Ecken (52, 54) voneinander beabstandet sind.

3. Halterung nach Anspruch 2, wobei die glatten, ausschnittsdefinierenden Oberflächen (48, 50) bogenförmig sind.

4. Halterung nach Anspruch 3, wobei jede der beiden glatten, ausschnittsdefinierenden Oberflächen (48, 50) bogenförmig ist und unterschiedliche Krümmungsradien aufweist.

5. Halterung nach einem der Ansprüche 3 bis 4, wobei jede der beiden glatten, ausschnittsdefinierenden Oberflächen (48, 50) bogenförmig ist und unterschiedliche Krümmungsmittelpunkte aufweist.

6. Halterung nach einem der Ansprüche 1 bis 5, wobei die elastizitätserhöhenden Ausschnitte (36) jeweils einen allgemein sichelförmigen Querschnitt in einer zur Radachse (18) orthogonalen Querschnittsebene aufweisen.

7. Halterung nach Anspruch 1, wobei:
jeder der elastizitätserhöhenden Ausschnitte (36) durch eine ausschnittsdefinierende Oberfläche (48, 50) definiert ist;
die ausschnittsdefinierende Oberfläche (48, 50) einen ersten bogenförmigen Abschnitt (48) und einen zweiten bogenförmigen Abschnitt (50) umfasst, der mit dem ersten bogenförmigen Abschnitt (48) durch ein Paar von beabstandeten Diskontinuitäten (52, 54) verbunden ist; und
der erste bogenförmige Abschnitt (48) und der zweite bogenförmige Abschnitt (50) unterschiedliche Krümmungsmittelpunkte und/oder unterschiedliche Krümmungsradien aufweisen.

8. Halterung nach Anspruch 1, wobei jeder der elastizitätserhöhenden Ausschnitte zumindest teilweise durch eine Vielzahl glatter, ausschnittsdefinierender Oberflächen (56, 58, 60, 62) definiert ist.

9. Halterung nach Anspruch 8, wobei mindestens ein Paar der Vielzahl der glatten, ausschnittsdefinierenden Oberflächen (56, 58, 60, 62) an einer nicht glatten Ecke zusammentrifft.

10. Halterung nach einem der Ansprüche 8 und 9, wobei die glatten, ausschnittsdefinierenden Oberflächen (58B, 60B) bogenförmig sind.

11. Halterung nach einem der Ansprüche 2 bis 5 und 7 bis 10, wobei sich die glatten ausschnittsdefinierenden Oberflächen (48, 50) jeweils in einer Richtung erstrecken, die parallel zur Radachse (18) ist.

12. Halterung nach einem der Ansprüche 2 bis 11, wobei die elastizitätserhöhenden Ausschnitte (36) so geformt oder angeordnet sind, dass jede gedachte Radiallinie zwischen der Radachse (18) und den Zähnen (28) mindestens ein Paar glatter, ausschnittsdefinierender Oberflächen (48, 50) mit einem oder mehreren nicht glatten Übergängen dazwischen schneidet.

13. Halterung nach Anspruch 12, wobei mindestens eine gedachte Radiallinie ein zweites Paar glatter, ausschnittsdefinierender Oberflächen (48', 50') mit einem oder mehreren nicht glatten Übergängen dazwischen schneidet.

14. Halterung nach einem der Ansprüche 1 bis 13, wobei das Verhältnis des Volumens der elastizitätserhöhenden Ausschnitte zum Volumen des Schneckenrads zwischen 15 % und 45 % beträgt, wodurch ein Radkörper mit einer Masse bereitgestellt wird, die 15 % bis 45 % geringer ist als die Masse, die der Radkörper hätte, wenn er aus massivem Material hergestellt wäre.

15. Halterung nach einem der Ansprüche 1 bis 14, umfassend eine Basisträgerkomponente und wobei die Basis (108) relativ zu der Basisträgerkomponente beweglich ist und die Schneckenwelle (104) von der Basis (108) so getragen wird, dass eine Bewegung der Basis (108) relativ zu der Basisträgerkomponente eine entsprechende Bewegung der Schneckenachse und der Radachse bewirkt, während die Rechtwinkligkeit zwischen ihnen beibehalten wird.

## Revendications

1. Monture pour un télescope ou autre instrument optique comprenant :
une base (108) ;
un support (106) pour supporter un instrument optique monté sur celui-ci ;
un ensemble engrenage à vis sans fin (10) ;
le support (106) étant mobile par rapport à la base (108) autour d'un axe de roue (18, 112) par fonctionnement de l'ensemble engrenage à vis sans fin (10) ;
l'ensemble engrenage à vis sans fin (10) comprenant :
une roue à vis sans fin (14) reliée de manière rigide au support (106), de telle sorte qu'un mouvement de la roue à vis sans fin (14) autour de l'axe de roue (18) provoque un mouvement correspondant du support (106) autour de l'axe de roue (18) ;
un arbre à vis sans fin (12) comprenant un corps de vis sans fin (20) s'étendant dans une direction longitudinale (17) et un filetage (22) s'étendant en spirale sur le corps de vis sans fin (20) autour d'un axe de vis sans fin (16) qui s'étend dans la direction longitudinale (17) et est orthogonal à l'axe de roue (18), l'arbre à vis sans fin (12) étant supporté par la base (108) pour un mouvement de rotation autour de l'axe de vis sans fin (16) ;
la roue à vis sans fin (14) comprenant un corps de roue (24) généralement en forme de disque comprenant une pluralité de dents (28) s'étendant radialement et espacées circonférentiellement au niveau d'une surface périphérique radialement la plus à l'extérieur pour une mise en prise du filetage (22) de l'arbre à vis sans fin (12), de sorte qu'une rotation de l'arbre à vis sans fin (12) autour de l'axe de vis sans fin (16) provoque, par mise en prise des dents (28) et du filetage (22), une rotation correspondante de la roue à vis sans fin (14) autour de l'axe de roue (18) et une rotation relative correspondante du support (106) et de la base (108) autour de l'axe de roue (18) ; **caractérisée en ce que**
le corps de roue (24) est formé pour définir une pluralité de découpes améliorant l'élasticité (36) espacées de l'axe de roue (18) et s'étendant à travers le corps de roue (24) dans des directions parallèles à l'axe de roue (18), les découpes améliorant l'élasticité (36) améliorant l'élasticité de la roue à vis sans fin (14) dans une direction radiale par rapport à un corps de roue solide de telle sorte que la roue à vis sans fin (14) peut se déformer radialement et vers l'intérieur.

2. Monture selon la revendication 1, dans laquelle chacune des découpes améliorant l'élasticité (36) est définie, au moins en partie, par une paire de surfaces lisses définissant une découpe (48, 50) qui se rencontrent au niveau de premier et deuxième coins non lisses (52, 54), les premier et deuxième coins non lisses (52, 54) étant espacés l'un de l'autre.

3. Monture selon la revendication 2, dans laquelle les surfaces lisses définissant une découpe (48, 50) sont arquées.

4. Monture selon la revendication 3, dans laquelle chacune de la paire de surfaces lisses définissant une découpe (48, 50) est arquée et comprend différents rayons de courbure.

5. Monture selon l'une quelconque des revendications 3 à 4, dans laquelle chacune de la paire de surfaces lisses définissant une découpe (48, 50) est arquée et comprend différents centres de courbure.

6. Monture selon l'une quelconque des revendications 1 à 5, dans laquelle les découpes améliorant l'élasticité (36) comprennent chacune une section transversale généralement en forme de croissant dans un plan de section transversale orthogonal à l'axe de roue (18).

7. Monture selon la revendication 1, dans laquelle :
chacune des découpes améliorant l'élasticité (36) est définie par une surface définissant une découpe (48, 50) ;
la surface définissant une découpe (48, 50) comprend une première partie arquée (48) et une deuxième partie arquée (50) reliée à la première partie arquée (48) par une paire de discontinuités (52, 54) espacées ; et
la première partie arquée (48) et la deuxième partie arquée (50) comprennent différents centres de courbure et/ou différents rayons de courbure.

8. Monture selon la revendication 1, dans laquelle chacune des découpes améliorant l'élasticité est définie, au moins en partie, par une pluralité de surfaces lisses définissant une découpe (56, 58, 60, 62).

9. Monture selon la revendication 8, dans laquelle au moins une paire de la pluralité de surfaces lisses définissant une découpe (56, 58, 60, 62) se rencontre au niveau d'un coin non lisse.

10. Monture selon l'une quelconque des revendications 8 et 9 dans laquelle les surfaces lisses définissant une découpe (58B, 60B) sont arquées.

11. Monture selon l'une quelconque des revendications 2 à 5 et 7 à 10, dans laquelle les surfaces lisses définissant une découpe (48, 50) s'étendent chacune dans une direction qui est parallèle à l'axe de roue (18).

12. Monture selon l'une quelconque des revendications 2 à 11, dans laquelle les découpes améliorant l'élasticité (36) sont formées ou situées de telle sorte que n'importe quelle ligne radiale notionnelle entre l'axe de roue (18) et les dents (28) coupe au moins une paire de surfaces lisses définissant une découpe (48, 50) ayant une ou plusieurs transitions non lisses entre elles.

13. Monture selon la revendication 12, dans laquelle au moins une ligne radiale notionnelle coupe une deuxième paire de surfaces lisses définissant une découpe (48', 50') ayant une ou plusieurs transitions non lisses entre elles.

14. Monture selon l'une quelconque des revendications 1 à 13, dans laquelle un rapport entre le volume des découpes améliorant l'élasticité et le volume de la roue à vis sans fin est entre 15 % et 45 %, fournissant ce faisant un corps de roue ayant une masse qui est 15 % à 45 % inférieure à une masse que le corps de roue aurait s'il était réalisé en matériau solide.

15. Monture selon l'une quelconque des revendications 1 à 14 comprenant un composant de support de base et dans laquelle la base (108) est mobile par rapport au composant de support de base et l'arbre à vis sans fin (104) est supporté par la base (108) de telle sorte qu'un mouvement de la base (108) par rapport au composant de support de base provoque un mouvement correspondant de l'axe de vis sans fin et de l'axe de roue, tout en maintenant l'orthogonalité entre eux.
